# EUROPEAN PATENT APPLICATION

(11) **EP 3 671 675 A1**
(43) Date of publication of application: **24.06.2020**
(21) Application number: 18846074.5
(22) Date of filing: 03.08.2018
(51) Int. Cl.: G07D 7/12, G01N 21/64

(54) **FLUORESCENCE/PHOSPHORESCENCE DETECTION DEVICE AND FLUORESCENCE/PHOSPHORESCENCE DETECTION METHOD**

(30) Priority: 18.08.2017 JP 2017158283
(71) Applicant: Glory Ltd., Hyogo 670-8567 (JP)
(72) Inventor: BOGAKI, Akira, Himeji-shi Hyogo 670-8567 (JP); NISHIKAWA, Masashi, Himeji-shi Hyogo 670-8567 (JP)
(74) Representative: SSM Sandmair
(86) International application number: PCT/JP2018/029309
(87) International publication number: WO 2019/035376

(57) **Abstract**

In order to detect fluorescence and phosphorescence from various sheets, a fluorescence/phosphorescence detector includes: a light source that emits light toward a sheet being transported along a transport path; a light receiver that receives light emitted from the sheet; a memory in which a plurality of kinds of measurement modes are stored; a measurement mode selection unit that selects a measurement mode according to the kind of the sheet; a light source control unit that controls an emission intensity and an emission period of the light source in the measurement mode selected by the measurement mode selection unit; and a data acquisition unit that acquires, from the light receiver, at least one of fluorescence data obtained by measuring the fluorescence and phosphorescence data obtained by measuring the phosphorescence, in the measurement mode selected by the measurement mode selection unit. An emission intensity and an emission period of the light emitted from the light source, a timing and a measurement period to measure the fluorescence by the light receiver, and a timing and a measurement period to measure the phosphorescence by the light receiver are set in each mode.

## Description

### TECHNICAL FIELD

The present invention relates to a fluorescence/phosphorescence detector and a fluorescence/phosphorescence detection method for detecting fluorescence and phosphorescence.

### BACKGROUND ART

Conventionally, fluorescence emitting ink and phosphorescence emitting ink have been used as security features for recognizing authenticity of sheets. Fluorescence is a kind of luminescence which occurs when a substance is irradiated with excitation light, and is extinguished right after the irradiation with the excitation light is stopped. Meanwhile, phosphorescence is a kind of luminescence which continues to glow even after irradiation with excitation light is stopped, and gradually weakens to be extinguished. Patent Literature 1 discloses a fluorescence/phosphorescence detector that detects both fluorescence and phosphorescence. When detecting fluorescence, the detector amplifies an obtained signal with a predetermined amplification factor. When detecting phosphorescence, the detector amplifies the signal at an amplification factor higher than that for the fluorescence detection. Although the emission intensity of phosphorescence is lower than that of fluorescence, both fluorescence and phosphorescence can be detected with adequate signal intensities by changing the amplification factor.

### CITATION LIST

### [PATENT LITERATURE]

[PTL 1] Japanese Laid-Open Patent Publication No. 2016-151964

### SUMMARY OF THE INVENTION

### PROBLEMS TO BE SOLVED BY THE INVENTION

However, in recent years, a detector capable of flexibly dealing with detection of various kinds of luminescence has been desired. For example, although both fluorescence and phosphorescence are detected in the conventional art described above, there are cases where only either fluorescence or phosphorescence has to be detected, depending on the kinds of sheets. Also, for example, there are cases where just detection of luminescence is required and where detection of luminescence at a high resolution is required, depending on the security features of sheets.

The present invention is made in view of the problem of the conventional art, and an object of the present invention is to provide a fluorescence/phosphorescence detector and a fluorescence/phosphorescence detection method capable of flexibly dealing with detection of various kinds of luminescence.

### SOLUTION TO THE PROBLEMS

In order to solve the above problems and achieve the above object, the present invention provides a fluorescence/phosphorescence detector including: a light source configured to emit light toward a sheet being transported along a transport path; a light receiver configured to receive light emitted from the sheet; a memory configured to store therein, a plurality of kinds of measurement modes which are different from each other in at least one of a time period of light emission from the light source, an emission intensity of the light from the light source, a timing to measure fluorescence by the light receiver, a time period of measurement of the fluorescence, a timing to measure phosphorescence by the light receiver, and a time period of measurement of the phosphorescence; a measurement mode selection unit configured to select any of the measurement modes; a light source control unit configured to control the light source, based on the measurement mode selected by the measurement mode selection unit; and a data acquisition unit configured to acquire, from the light receiver, at least one of fluorescence data obtained by measuring the fluorescence and phosphorescence data obtained by measuring the phosphorescence, based on the measurement mode selected by the measurement mode selection unit.

In the above invention, the measurement modes include: a fluorescence/phosphorescence mode for acquiring the fluorescence data while the light source is lit, and acquiring the phosphorescence data after the light source is turned off; a fluorescence mode for acquiring the fluorescence data while the light source is lit, with a higher resolution than in the fluorescence/phosphorescence mode; and a phosphorescence mode for acquiring the phosphorescence data after the light source emits light a greater amount of light than in the fluorescence/phosphorescence mode and is turned off.

In the above invention, the light source is lit during a longer time period in the phosphorescence mode than in the fluorescence/phosphorescence mode.

In the above invention, the fluorescence/phosphorescence mode and the phosphorescence mode each include a dummy period in which neither the fluorescence data nor the phosphorescence data is acquired.

In the above invention, the light source is lit during the dummy period in the phosphorescence mode.

In the above invention, the measurement mode selection unit receives an input indicating the kind of the sheet, and selects a measurement mode corresponding to the kind of the sheet.

In the above invention, the fluorescence/phosphorescence detector further includes a recognition unit disposed along the transport path, and configured to recognize the kind of the sheet being transported along the transport path. The measurement mode selection unit receives an input indicating the kind of the sheet from the recognition unit, and selects a measurement mode corresponding to the kind of the sheet.

The present invention further provides a fluorescence/phosphorescence detection method of detecting, by a fluorescence/phosphorescence detector, fluorescence and phosphorescence emitted from a sheet being transported along a transport path. The method includes: selecting a measurement mode from among a plurality of kinds of measurement modes which are different from each other in at least one of a time period of light emission from the light source, an emission intensity of the light from the light source, a timing to measure fluorescence by the light receiver, a time period of measurement of the fluorescence, a timing to measure phosphorescence by the light receiver, and a time period of measurement of the phosphorescence; emitting light from the light source, based on the selected measurement mode; and acquiring, from the light receiver, at least one of fluorescence data obtained by measuring the fluorescence and phosphorescence data obtained by measuring the phosphorescence, based on the selected measurement mode.

### ADVANTAGEOUS EFFECTS OF THE INVENTION

According to the fluorescence/phosphorescence detector of the present invention, it is possible to use a measurement mode in which an amount of light to be applied from a light source toward a sheet being transported, a method of measuring fluorescence emitted on the sheet, a method of measuring phosphorescence emitted on the sheet, etc., are set. Preparing a plurality of kinds of measurement modes in accordance with the kinds of luminescence to be observed on the sheet allows the fluorescence/phosphorescence detector to flexibly deal with detection of various kinds of fluorescence and phosphorescence.

### BRIEF DESCRIPTION OF THE DRAWINGS

[FIG. 1] FIG. 1A, 1B, 1C and 1D illustrate an outline of a fluorescence/phosphorescence detector.
[FIG. 2] FIG. 2 is a schematic cross-sectional view showing a configuration of the fluorescence/phosphorescence detector.
[FIG. 3] FIG. 3 is a block diagram showing a functional configuration of the fluorescence/phosphorescence detector.
[FIG. 4] FIG. 4 is a timing chart showing timings to measure both fluorescence and phosphorescence in a fluorescence/phosphorescence mode.
[FIG. 5] FIG. 5 is a timing chart showing a timing to measure fluorescence in a fluorescence mode.
[FIG. 6] FIG. 6 is a timing chart showing timings to measure fluorescence and phosphorescence in a phosphorescence mode.
[FIG. 7] FIG. 7 is a timing chart, in a phosphorescence mode, showing measurement timings with a banknote transport speed different from that in FIG. 6.
[FIG. 8] FIG. 8 is a schematic cross-sectional view showing an example of a configuration of a fluorescence/phosphorescence detector that acquires a transmission image.
[FIG. 9] FIG. 9 is a timing chart showing timings to measure fluorescence, phosphorescence, and transmissive light in a fluorescence/phosphorescence mode.
[FIG. 10] FIG. 10 is a timing chart showing timings to measure fluorescence and transmissive light in a fluorescence mode.
[FIG. 11] FIG. 11 is a timing chart showing timings to measure fluorescence, phosphorescence, and transmissive light in a phosphorescence mode.

### DESCRIPTION OF EMBODIMENTS

Hereinafter, a fluorescence/phosphorescence detector and a fluorescence/phosphorescence detection method according to an embodiment of the present invention will be described in detail with reference to the accompanying drawings. Although the kinds of sheets to be handled by the fluorescence/phosphorescence detector and the fluorescence/phosphorescence detection method are not particularly limited, an example in which banknotes are handled is described in the present embodiment.

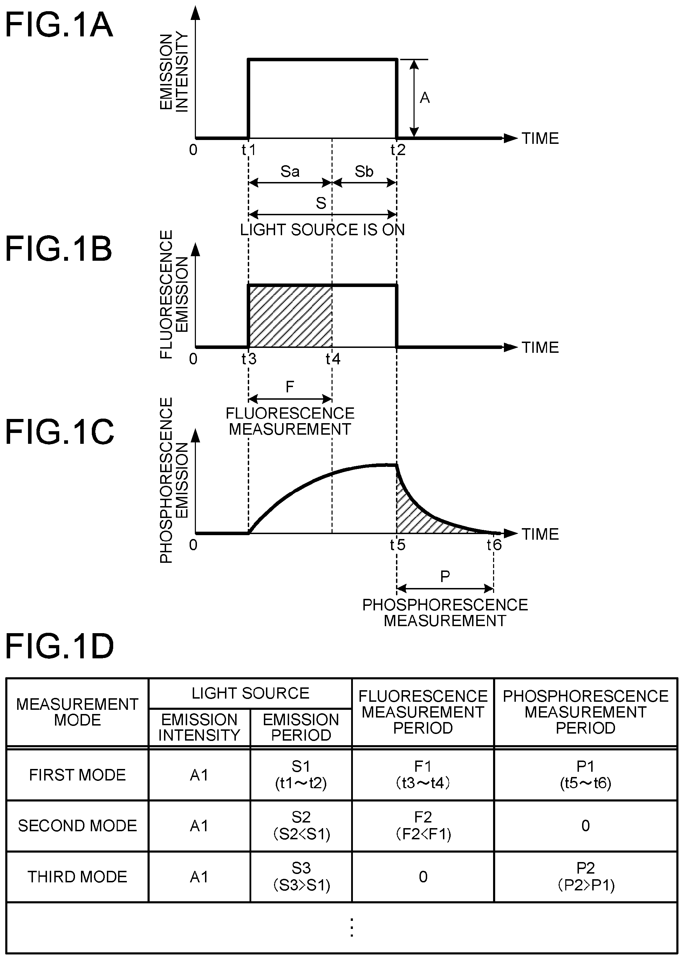

FIG. 1A, 1B, 1C and 1D illustrate the outline of a fluorescence/phosphorescence detector. The fluorescence/phosphorescence detector includes a light source that emits light toward a banknote, and a light receiver that receives light emitted from the banknote. For example, on the banknote, a security mark is printed using a specific ink that emits light when irradiated with excitation light such as ultraviolet light. When excitation light is emitted from the light source toward the banknote, the security mark emits light. Depending on the kind of the banknote, there are cases where fluorescence emission is observed, where phosphorescence emission is observed, and where both fluorescence emission and phosphorescence emission are observed.

The fluorescence/phosphorescence detector controls the light source to emit light toward the banknote. As shown in FIG. 1A, light having an emission intensity A is emitted from the light source for a time period S (t1 to t2). The fluorescence/phosphorescence detector can control the amount of light emitted from the light source. The amount of light is controlled by changing at least one of the emission intensity A and the emission period S of the light source. The emission intensity A is controlled by changing, for example, the number of illuminators such as LEDs used as the light source, or the value of current that flows through the illuminators.

The fluorescence/phosphorescence detector detects fluorescence emitted from the banknote, by using the light receiver. As shown in FIG. 1B, fluorescence emission continues during the time period S in which the light source is lit. During a time period F (t3 to t4) in which the fluorescence is observed, the fluorescence/phosphorescence detector processes a signal, which is outputted from the light receiver that receives light, as a fluorescence detection signal. A hatched part shown in FIG. 1B is detected as the fluorescence. The fluorescence/phosphorescence detector can control the time period F in which the fluorescence is detected. In addition, while the light source is lit (t1 to t2), the fluorescence/phosphorescence detector can control a timing (t3) which is a time point to start measurement of the fluorescence, and a timing (t4) which is a time point to end the measurement of the fluorescence. The operation of measuring the emission intensity of the fluorescence in a predetermined cycle is repeated during the time period F, and it allows acquisition of fluorescence data having a predetermined resolution. The method for acquiring the fluorescence data will be described later in detail.

The fluorescence/phosphorescence detector detects phosphorescence emitted from the banknote, by using the light receiver. As shown in FIG. 1C, the emission intensity of the phosphorescence gradually increases during the time period S in which the light source is lit. While fluorescence is extinguished right after the light source is turned off, phosphorescence continues to glow even after turn-off of the light source, and gradually weakens to be extinguished. During a time period P (t5 to t6) after turn-off of the light source, the fluorescence/phosphorescence detector processes a signal, which is outputted from the light receiver that receives light, as a phosphorescence detection signal. A hatched part shown in FIG. 1C is detected as the phosphorescence. The fluorescence/phosphorescence detector can control the time period P in which the phosphorescence is detected. In addition, after turning off the light source (t2 and afterward), the fluorescence/phosphorescence detector can control a timing (t5) which is a time point to start measurement of the phosphorescence, and a timing (t6) which is a time point to end the measurement of the phosphorescence. For example, when the time period before extinguishment of the phosphorescence varies depending on the kind of the banknote, measurement of the phosphorescence may be performed while the phosphorescence can be observed. The operation of measuring the emission intensity of the phosphorescence in a predetermined cycle is repeated during the time period P, and it allows acquisition of phosphorescence data having a predetermined resolution. The method for acquiring the phosphorescence data will be described later in detail.

During a time period Sa shown in FIG. 1A, light is emitted from the light source at a constant emission intensity A to measure the fluorescence indicated by hatching in FIG. 1B. If the light source is turned off after the time period Sa has elapsed, and the phosphorescence is measured, sufficient measurement accuracy may not be achieved because the emission intensity of the phosphorescence is low. In the fluorescence/phosphorescence detector, as shown in FIG. 1A, the light source can be set to further emit light during a time period Sb after the time period Sa has elapsed. Continuing light emission from the light source even after fluorescence measurement allows the amount of light that irradiates the banknote becomes sufficient for clear phosphorescence emission. The fluorescence/phosphorescence detector turns off the light source at a timing when the emission intensity of phosphorescence becomes sufficient, and measures the phosphorescence as shown by the hatching in FIG. 1C. Thus, both the fluorescence and the phosphorescence can be measured with sufficient measurement accuracy.

In the fluorescence/phosphorescence detector, a plurality of measurement modes may be prepared in advance so that fluorescence and phosphorescence are measured in a selected measurement mode. Each measurement mode allows setting of: an emission intensity and an emission period of light emitted from the light source; a timing to measure fluorescence by the light receiver and a measurement period; and a timing to measure phosphorescence by the light receiver and a measurement period.

For example, as shown in FIG. 1D, in a first mode, the emission intensity of the light source is set to A1, the emission period is set to S1, the fluorescence measurement period is set to F1, and the phosphorescence measurement period is set to P1. The emission period S1 of the light source can be set according to turn-on timing t1 and turn-off timing t2 of the light source shown in FIG. 1A. The fluorescence measurement period F1 can be set according to fluorescence measurement start timing t3 and end timing t4 shown in FIG. 1B. The phosphorescence measurement period P1 can be set according to phosphorescence measurement start timing t5 and end timing t6 shown in FIG. 1C.

For example, in a second mode, the emission period of the light source is set to S2 that is shorter than S1, the fluorescence measurement period is set to F2 that is shorter than F1, and the phosphorescence measurement period is set to 0 (zero). For example, in a third mode, the emission period of the light source is set to S3 that is longer than S1, the fluorescence measurement period is set to 0 (zero), and the phosphorescence measurement period is set to P2 that is longer than P1. In addition, other measurement modes, in each of which the respective values including emission intensity are set according to the feature of luminescence observed on the banknote, may be prepared in advance.

In the fluorescence/phosphorescence detector, a plurality of kinds of measurement modes can be prepared in advance. The measurement modes are different from each other in at least one of: a time period in which light is emitted from the light source; an emission intensity of the light emitted from the light source; a timing to measure fluorescence by the light receiver; a time period in which the fluorescence is measured; a timing to measure phosphorescence by the light receiver; and a time period in which the phosphorescence is measured. The fluorescence/phosphorescence detector selects, from among the measurement modes, a measurement mode according to the kind of the banknote, and measures luminescence. For example, upon receiving a manual operation of a user to select a measurement mode, the fluorescence/phosphorescence detector selects the measurement mode. Alternatively, upon receiving a manual operation of the user to select a kind of a banknote, the fluorescence/phosphorescence detector selects a measurement mode corresponding to the kind of the banknote. Still alternatively, upon receiving an input of a recognition result obtained through recognition of a kind of a banknote by another device such as a banknote recognition device, the fluorescence/phosphorescence detector selects a measurement mode corresponding to the kind of the banknote. The correspondence between the measurement modes and the kinds of banknotes is set in advance and are managed in the fluorescence/phosphorescence detector.

For example, as for a banknote on which both fluorescence and phosphorescence are observed, fluorescence and phosphorescence are measured in the first mode shown in FIG. 1D. As for a banknote on which fluorescence is observed but phosphorescence is not observed, fluorescence is measured in the second mode. As for a banknote on which phosphorescence is observed but fluorescence is not observed, phosphorescence is measured in the third mode. In the fluorescence/phosphorescence detector, the measurement mode can be changed according to the kind of luminescence observed on the banknote.

Conventionally, a banknote handling apparatus has been used. The banknote handling apparatus receives a plurality of banknotes, takes the banknotes one by one into the apparatus, and recognizes the kind of each banknote, such as denomination, authenticity, and fitness, by a recognition unit while transporting the banknotes along a transport path. Since the function and operation of such a banknote handling apparatus have been known, detailed description thereof is omitted. The fluorescence/phosphorescence detector is disposed along the transport path on the downstream side of the recognition unit in the banknote transport direction and is used in the banknote handling apparatus. The recognition unit recognizes the kind of each banknote, based on the optical feature, the magnetic feature, the thickness, etc., of the banknote, as in the conventional apparatus. The recognition unit inputs the banknote recognition result into the fluorescence/phosphorescence detector. Upon receiving the banknote recognition result, the fluorescence/phosphorescence detector changes the measurement mode to a measurement mode corresponding to the recognized kind of the banknote. Then, the fluorescence/phosphorescence detector measures at least one of fluorescence and phosphorescence in accordance with the timing at which the banknote recognized by the recognition unit is transported to the fluorescence/phosphorescence detector along the transport path. By repeating the above operation for each banknote while a plurality of banknotes are successively transported one by one, luminescence can be measured with high accuracy in the measurement mode corresponding to each banknote. The banknote handling apparatus uses the luminescence characteristics of each banknote obtained by the fluorescence/phosphorescence detector, for recognition of authenticity of the banknote, for example.

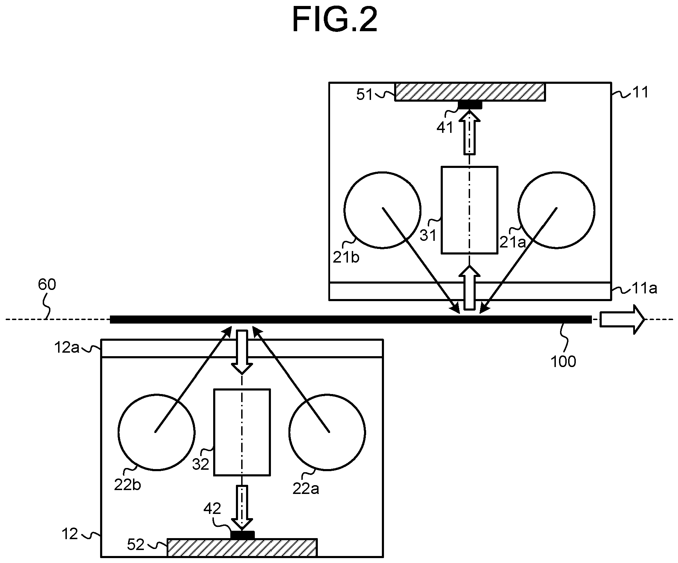

Next, the configuration and the measurement modes of the fluorescence/phosphorescence detector will be specifically described. FIG. 2 is a schematic cross-sectional view showing the configuration of the fluorescence/phosphorescence detector. FIG. 2 shows the fluorescence/phosphorescence detector disposed along a transport path 60 along which a banknote 100 is transported, as viewed from a side surface thereof perpendicular to the transport direction. The fluorescence/phosphorescence detector includes an upper unit 11 disposed above the transport path 60, and a lower unit 12 disposed beneath the transport path 60. The upper unit 11 and the lower unit 12 are shifted from each other in the transport direction of the banknote 100, along the transport path 60.

The upper unit 11 has a structure in which a light source 21 (21a, 21b), a condenser lens 31, and a substrate 51 on which a light receiver 41 is disposed, are accommodated in a case made of black resin, for example. A transparent member 11a made of glass or resin is fitted in a lower surface, of the case, facing an upper surface of the banknote 100. Light emitted from the light source 21 passes through the transparent member 11a and is applied to the upper surface of the banknote 100 present outside the case. Light reflected by the upper surface of the banknote 100 and light emitted from the upper surface of the banknote enter the case through the transparent member 11a, and are condensed by the condenser lens 31 to be received by the light receiver 41.

The light receiver 41 is a line sensor in which a plurality of light-receiving elements are arrayed in a direction perpendicular to the transport direction of the banknote 100. The light-receiving elements forming the light receiver 41 are arrayed in the direction perpendicular to the transport direction so as to have a length exceeding the width of the banknote 100. Transporting the banknote 100 so as to pass the position of measurement by the light receiver 41 allows light is detected from the entire surface of the banknote 100. For example, data outputted from the light receiver 41 that receives light is successively obtained while transporting the banknote 100, whereby an image of the entire surface of the banknote 100 can be generated.

The light source 21 includes a light source 21a that emits light toward the banknote 100 from the upstream side in the transport direction, and a light source 21b that emits light toward the banknote 100 from the downstream side in the transport direction. The light source 21 is disposed so as to correspond to the light receiver 41. The light source 21 can emit a plurality of kinds of light having different wavelengths. For example, the light source 21 emits ultraviolet light as excitation light used for observing fluorescence and phosphorescence on the upper surface of the banknote.

The condenser lens 31 receives light, which is emitted from the upper surface of the banknote irradiated with light emitted from the light source 21, and condenses the received light onto the light receiver 41. The condenser lens 31 is disposed so as to correspond to the light-receiving elements forming the light receiver 41. Specifically, for example, the condenser lens 31 includes a plurality of lenses, and each lens is disposed so as to correspond to a light-receiving element.

Since the lower unit 12 has the same structure as the upper unit 11, repeated description is omitted. The lower unit 12 can be realized by inverting a unit having the same structure as the upper unit 11 in the up-down direction. The lower unit 12 is disposed at a position beneath the transport path 60 and on the upstream side of the upper unit 11 in the transport direction along the transport path 60.

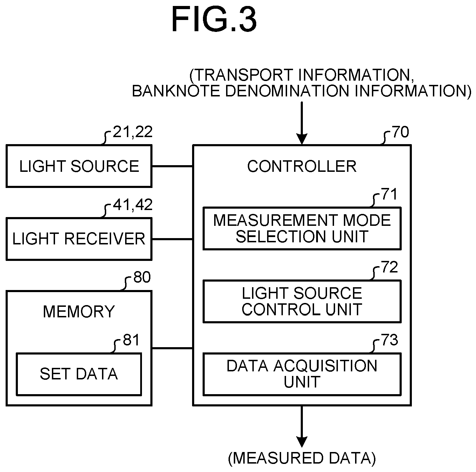

FIG. 3 is a block diagram showing the functional configuration of the fluorescence/phosphorescence detector. In addition to the components shown in FIG. 2, the fluorescence/phosphorescence detector includes a controller 70 and a memory 80. The light sources 21, 22, the light receivers 41, 42, and the memory 80 are connected to the controller 70. The controller 70 controls these components to realize the functions and operations described in the present embodiment.

The memory 80 is implemented by a nonvolatile semiconductor memory, for example. Software programs and data required for the operation of the controller 70 are stored in the memory 80. Data indicating the plurality of measurement modes shown in FIG. 1 and the correspondence between the measurement modes and the kinds of banknotes, are stored in the memory 80 as setting data 81.

The controller 70 includes a measurement mode selection unit 71, a light source control unit 72, and a data acquisition unit 73. The measurement mode selection unit 71 selects a measurement mode corresponding to the kind of the banknote 100 being transported along the transport path 60. The light source control unit 72 controls turn-on and turn-off of the light sources 21, 22. The data acquisition unit 73 acquires data of fluorescence and light emission measured by the light receivers 41, 42.

The fluorescence/phosphorescence detector is disposed along the transport path 60 in the banknote handling apparatus. The banknote handling apparatus uses data, which is obtained through measurement of luminescence on the banknote by the fluorescence/phosphorescence detector, for recognizing denomination, authenticity, etc., of the banknote. The banknote handling apparatus controls transport of the banknote 100 along the transport path 60. The transport speed of the banknote 100 can be changed by operating the operation unit or the like of the banknote handling apparatus. For example, the transport speed can be changed to different transport speeds such as 2300 mm/S and 1600 mm/S.

As shown in FIG. 3, the controller 70 acquires, from the banknote handling apparatus, transport information, banknote denomination information, etc. The transport information includes the transport speed, transport state, transport position, etc., of the banknote 100 being transported in the transport path 60. The banknote denomination information includes the denomination, etc., of the banknote 100 being transported in the transport path 60.

On the upstream side of the fluorescence/phosphorescence detector shown in FIG. 2 in the transport direction, a recognition unit for recognizing the banknote 100 is disposed. When the recognition unit recognizes the denomination, etc., of the banknote 100, this information is inputted to the controller 70 as the banknote denomination information. Based on the banknote denomination information, the measurement mode selection unit 71 selects a measurement mode corresponding to the kind of the banknote 100.

A banknote detection sensor for detecting the transport position of the banknote 100 is disposed along the transport path 60. The banknote detection sensor can specify the banknote transport state such as the banknote 100 being skewed, or a plurality of banknotes being transported while overlapping one another. Upon acquiring the information such as the transport speed, transport state, and the transport position of the banknote 100, the controller 70 recognizes, for example, the timing at which the banknote 100 passes the position of measurement by the upper unit 11 and the lower unit 12.

Specifically, the controller 70 recognizes the timing at which the banknote 100 passes the position of measurement by the lower unit 12. Based on this timing, the light source control unit 72 controls the light source 22 in the measurement mode selected by the measurement mode selection unit 71. In addition, the data acquisition unit 73 acquires, from the light receiver 42, data obtained through measurement of luminescence on the lower surface of the banknote 100. The acquired data allows generation of an image of the entire lower surface of the banknote 100. Specifically, an upper fluorescence image obtained by imaging fluorescence over the entire lower surface, and a lower phosphorescence image obtained by imaging phosphorescence over the entire lower surface, are generated.

Likewise, the controller 70 recognizes the timing at which the banknote 100 passes the position of measurement by the upper unit 11. Based on this timing, the light source control unit 72 controls the light source 21 in the measurement mode selected by the measurement mode selection unit 71. In addition, the data acquisition unit 73 acquires, from the light receiver 41, data obtained through measurement of luminescence on the upper surface of the banknote 100. The acquired data allows generation of an image of the entire upper surface of the banknote 100. Specifically, an upper fluorescence image obtained by imaging fluorescence over the entire upper surface, and an upper phosphorescence image obtained by imaging phosphorescence over the entire upper surface, are generated.

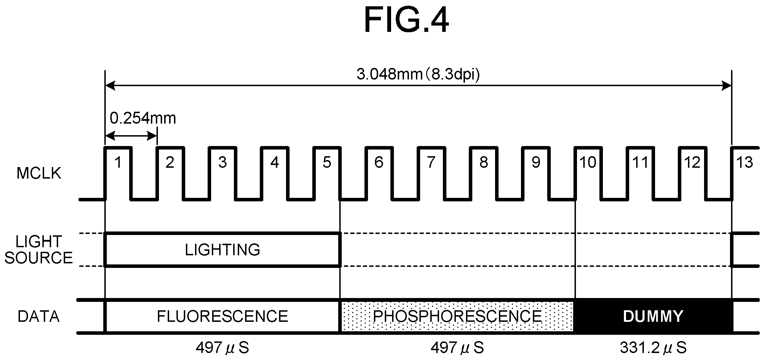

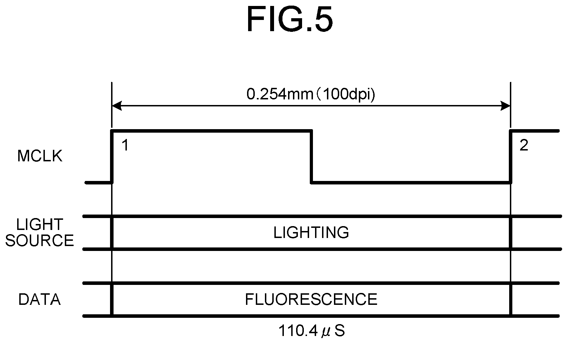

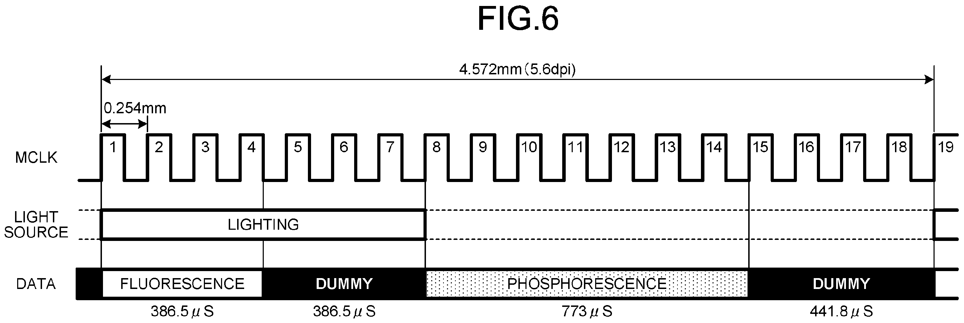

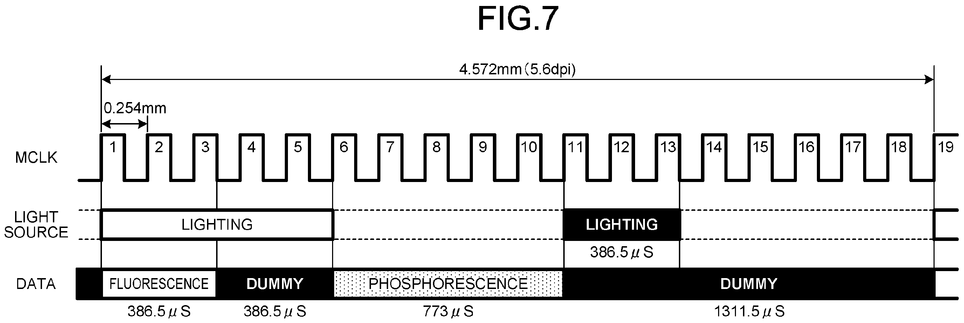

Next, three measurement modes, i.e., a fluorescence/phosphorescence mode, a fluorescence mode, and a phosphorescence mode, will be described with reference to FIG. 4 to FIG. 7. FIG. 4 is a timing chart showing timings to measure both fluorescence and phosphorescence in the fluorescence/phosphorescence mode. FIG. 5 is a timing chart showing a timing to measure fluorescence in the fluorescence mode. FIG. 6 is a timing chart showing timings to measure fluorescence and phosphorescence in the phosphorescence mode. FIG. 4 to FIG. 6 each show a case where the banknote 100 is transported at a transport speed of 2300 mm/S. FIG. 7 is a timing chart in the phosphorescence mode, showing measurement timings in a case where the transport speed of the banknote 100 is different from that shown in FIG. 6. FIG. 7 shows a case where the banknote 100 is transported at a transport speed of 1600 mm/S.

FIGS. 4 to FIG. 7 each show one cycle of measurement in the corresponding measurement mode. Data obtained by one cycle of measurement is line data and therefore, an image of the entire surface of the banknote 100 can be generated by repeating the measurement. The light receivers 41, 42 have a resolution of 200 dpi in a main scanning direction perpendicular to the transport direction of the banknote 100. Meanwhile, the resolution in a sub scanning direction parallel to the transport direction of the banknote 100 varies among the measurement modes. The resolution in the sub scanning direction is 8.3 dpi in the fluorescence/phosphorescence mode shown in FIG. 4, 100 dpi in the fluorescence mode shown in FIG. 5, and 5.6 dpi in the phosphorescence mode shown in FIG. 6 and FIG. 7.

An upper part of the timing chart shown in each of FIG. 4 to FIG. 7 shows a mechanical clock (MCLK) outputted according to transfer of the banknote 100. One rectangular-wave pulse signal is outputted each time the banknote 100 is transported by 0.254 mm in the transport path 60. An intermediate part of the timing chart shows a timing to turn on the light source 21. A lower part of the timing chart shows a timing to measure fluorescence and a timing to measure phosphorescence by the light receiver 41. The method for measuring luminescence on the upper surface of the banknote by the upper unit 11 is identical to the method of measuring luminescence on the lower surface of the banknote by the lower unit 12. Therefore, the upper unit 11 will be described as an example hereinafter.

When measuring luminescence in the fluorescence/phosphorescence mode shown in FIG. 4, the light source control unit 72 turns on the light source 21 at a predetermined emission intensity in accordance with rising of the pulse wave of the MCLK. The light source control unit 72 turns off the light source 21 when a period of 497 µS has elapsed.

When the light source 21 is turned on, fluorescence emission is observed on the upper surface of the banknote 100. Simultaneously with turn-on of the light source 21 by the light source control unit 72, the data acquisition unit 73 starts to acquire data from the light receiver 41 that receives fluorescence. Acquisition of the fluorescence data is continued for 497 µS until the light source 21 is turned off. Simultaneously with turn-off of the light source 21, the data acquisition unit 73 ends acquisition of the fluorescence data.

Simultaneously with turn-off of the light source 21 by the light source control unit 72, the data acquisition unit 73 starts to acquire data from the light receiver 41 that receives phosphorescence. Acquisition of the phosphorescence data is continued for 497 µS after turn-off of the light source 21.

After acquisition of the phosphorescence data has ended, a dummy period takes place in which the data acquisition unit 73 acquires neither fluorescence data nor phosphorescence data. After the dummy period has continued for 331.2 µS, the one cycle of measurement is completed and the next cycle of measurement is started. Since the dummy period is provided, variation in the transport speed of the banknote 100 can be absorbed by an increase/decrease of the dummy period. Specifically, even when the period of the one cycle shown in FIG. 4 is minimized due to variation in the transport speed, the fluorescence data can be acquired for 497µS while turning on the light source 21 and the phosphorescence data can be acquired for 497 µSn while turning off the light source 21, although the dummy period is reduced.

While the banknote 100 passes the position of measurement by the upper unit 11, the light source control unit 72 and the data acquisition unit 73 repeat the cycle shown in FIG. 4, whereby both fluorescence and phosphorescence can be measured over the entire surface of the banknote 100. One cycle of measurement is performed during a period of 1325.2 µS (= 497µS+497µS+331.2µS) equivalent to 12 pulses of the mechanical clock. During this period, the banknote 100, being transported at 2300 mm/S, advances by 3.048 mm. Therefore, the resolution in the sub scanning direction is about 8.3 dpi.

Also, when performing measurement in the fluorescence mode shown in FIG. 5, the light source control unit 72 turns on the light source 21 at the same emission intensity as that in the fluorescence/phosphorescence mode, in accordance with rising of the pulse wave of the MCLK. The light source control unit 72 turns off the light source 21 when a period of 110.4 µS corresponding to 1 pulse of the mechanical clock, has elapsed.

When the light source 21 is turned on, fluorescence emission is observed on the upper surface of the banknote 100. Simultaneously with turn-on of the light source 21 by the light source control unit 72, the data acquisition unit 73 starts to acquire data from the light receiver 41 that receives fluorescence. Acquisition of the fluorescence data is continued for 110.4 µS until the light source 21 is turned off. Simultaneously with turn-off of the light source 21 by the light source control unit 72, the data acquisition unit 73 ends acquisition of the fluorescence data. In the fluorescence mode, measurement of phosphorescence is not performed. In addition, a dummy period is not included in the fluorescence mode. The data acquisition unit 73 continues acquisition of the fluorescence data for 110.4 µS to complete the one cycle of measurement, and then starts the next cycle of measurement.

While the banknote 100 passes the position of measurement by the upper unit 11, the light source control unit 72 and the data acquisition unit 73 repeat the cycle shown in FIG. 5, whereby fluorescence can be measured over the entire surface of the banknote 100. One cycle of measurement is performed during a period of 110.4 µS equivalent to 1 pulse of the mechanical clock. During this period, the banknote 100, being transported at 2300 mm/S, advances by 0.254 mm. Therefore, the resolution in the sub scanning direction is about 100 dpi.

Also, when performing measurement in the phosphorescence mode shown in FIG. 6, the light source control unit 72 turns on the light source 21 at the same emission intensity as that in the fluorescence/phosphorescence mode and the fluorescence mode, in accordance with rising of the pulse wave of the MCLK. The light source control unit 72 turns off the light source 21 when a period of 773 µS (= 386.5µS+386.5µS) has elapsed.

When the light source control unit 72 turns on the light source 21, fluorescence emission is observed on the upper surface of the banknote 100. Simultaneously with turn-on of the light source 21 by the light source control unit 72, the data acquisition unit 73 starts to acquire data from the light receiver 41 that receives fluorescence. Acquisition of the fluorescence data is continued for 386.5 µS. When the period of 386.5 µS has elapsed from turn-on of the light source 21 by the light source control unit 72, a dummy period takes place in which the data acquisition unit 73 acquires neither fluorescence data nor phosphorescence data. The dummy period is continued for 386.5 µS until the light source control unit 72 turns off the light source 21.

Simultaneously with turn-off of the light source 21 by the light source control unit 72, the data acquisition unit 73 starts to acquire data from the light receiver 41 that receives phosphorescence. Acquisition of the phosphorescence data is continued for 773 µS from turn-off of the light source 21. After acquisition of the phosphorescence data has ended, a dummy period takes place again, in which the data acquisition unit 73 acquires neither fluorescence data nor phosphorescence data. After the dummy period has continued for 441.8 µS, the one cycle of measurement is completed and the next cycle of measurement is started.

While the banknote 100 passes the position of measurement by the upper unit 11, the light source control unit 72 and the data acquisition unit 73 repeat the cycle shown in FIG. 6, whereby both fluorescence and phosphorescence can be measured over the entire surface of the banknote 100. One cycle of measurement is performed during a period of 1987.8 µS (= 386.5µS+386.5µS+773µS+441.8µS) equivalent to 18 cycles of the mechanical clock. During this period, the banknote 100, being transported at 2300 mm/S, advances by 4.572 mm. Therefore, the resolution in the sub scanning direction is about 5.6 dpi.

While the lighting period of the light source 21 is 497 µS in the fluorescence/phosphorescence mode shown in FIG. 4, the lighting period of the light source 21 is long, i.e., 773 µS, in the phosphorescence mode shown in FIG. 6. Although the light source 21 emits light at the same emission intensity in both modes, the amount of light applied to the banknote 100 is increased with the increase in the light emission period. Therefore, the emission intensity of phosphorescence in the phosphorescence mode is higher than the emission intensity of phosphorescence in the fluorescence/phosphorescence mode. As a result, in the phosphorescence mode, a clearer image of phosphorescence can be obtained as compared to the fluorescence/phosphorescence mode. Although both the phosphorescence data and the fluorescence data are acquired in FIG. 6, the fluorescence data acquisition period shown in FIG. 6 may be changed to a dummy period so as to acquire only the phosphorescence data in the phosphorescence mode.

Similar to FIG. 6, FIG. 7 shows one cycle of measurement in the phosphorescence mode. However, the transport speed of the banknote 100 is 1600 mm/S in FIG. 7, while the transport speed of the banknote 100 is 2300 mm/S in FIG. 6. Therefore, a time period equivalent to 1 pulse of the mechanical clock, during which the banknote 100 is transported by a distance of 0.254 mm, is about 158 µS in FIG. 7 while it is 110.4 µS in FIG. 6.

As shown in FIG. 7, even when the transport speed of the banknote 100 is 1600 mm/S, lighting of the light source 21, acquisition of fluorescence data, and acquisition of phosphorescence data are performed at the same timings and for the same time periods as those in FIG. 6.

Specifically, the light source control unit 72 turns on the light source 21 in accordance with rising of the pulse wave of the MCLK, and turns off the light source 21 when a period of 773 µS has elapsed. Simultaneously with turn-on of the light source 21 by the light source control unit 72, the data acquisition unit 73 starts to acquire fluorescence data from the light receiver 41, and continues acquisition of the fluorescence data for 386.5 µS. After acquisition of the fluorescence data has ended, a dummy period of 386.5 µS takes place until the light source control unit 72 turns off the light source 21. When the light source control unit 72 turns off the light source 21 after the period of 773 µS has elapsed, the data acquisition unit 73 starts to acquire data from the light receiver 41 that receives phosphorescence, and continues acquisition of the phosphorescence data for 773 µS.

When the transport speed is 1600 mm/S, acquisition of the fluorescence data and acquisition of the phosphorescence data can be completed within a period of 1546 µS (= 386.5µS+386.5µS+773µS) as in the case where the transport speed is 2300 mm/S.

As shown in FIG. 6 and FIG. 7, even when the transport speed varies, one cycle consists of 18 pulses of the mechanical clock. The time difference due to the difference in the transport speed is dealt with by changing the length of the dummy period. Specifically, when the transport speed is 2300 mm/S, the dummy period is continued for 441.8 µS after acquisition of the phosphorescence data as shown in FIG. 6. Meanwhile, when the transport speed is 1600 mm/S, the dummy period after acquisition of the phosphorescence data is set to 1311.5 µS as shown in FIG. 7.

Even when the transport speed is 1600 mm/S, both fluorescence and phosphorescence can be measured over the entire surface of the banknote 100. One cycle of measurement is performed within a period of 2857.5 µS (= 386.5µS+386.5µS+773 µS+1311.5µS) equivalent to 18 cycles of the mechanical clock. During this period, the banknote 100, being transported at 1600 mm/S, advances by 4.572 mm. Therefore, the resolution in the sub scanning direction is about 5.6 dpi as in the case where the transport speed is 2300 mm/S.

When the transport speed is 2300 mm/S, as shown in FIG. 6, after one cycle of measurement has been started, the light source 21 is turned off when a period of 773 µS has elapsed. Then, the light source 21 is maintained to be off until the one cycle of measurement is ended. On the other hand, when the transport speed is 1600 mm/S, as shown in FIG. 7, after one cycle of measurement has been started, the light source 21 is turned off when a period of 773 µS has elapsed, but at the timing when acquisition of the phosphorescence data is ended, the light source 21 is turned on again. Thereafter, the light source 21 is turned off after a period of 386.5 µS has elapsed. The re-lighting of the light source 21 is performed during a dummy period in which neither fluorescence data nor phosphorescence data are acquired. As shown in FIG. 7, when the off period of the light source 21 is long after acquisition of the fluorescence data and acquisition of the phosphorescence data have ended, the light source 21 is lit again at a timing and for a time period that do not adversely affect measurement of fluorescence and phosphorescence, whereby stable measurement can be performed.

Although FIG. 7 shows measurement in the phosphorescence mode with the transport speed being 1600 mm/S, the transport speed may be changed. For example, the transport speed may be 1200 mm/S. In this case, lighting of the light source 21, acquisition of fluorescence data, and acquisition of phosphorescence data are executed at the same timings and for the same time periods as those shown in FIG. 6 and FIG. 7, within a period equivalent to 18 pulses of the mechanical clock. The remaining time period caused by the reduction in the transport speed is adjusted by the length of the dummy period. Re-lighting period of the light source 21 during the dummy period is changed according to the time period corresponding to the one cycle. For example, while the re-lighting period in the dummy period is 386.5 µS in FIG. 7 where the transport speed is 1600 mm/S, the re-lighting period in the dummy period is 773 µS when the transport speed is 1200 mm/S.

Also, in the fluorescence/phosphorescence mode shown in FIG. 4, the transport speed can be changed to 2300 mm/S or lower as in the phosphorescence mode. In this case, as in the phosphorescence mode, even when the transport speed is changed, lighting of the light source 21, acquisition of fluorescence data, and acquisition of phosphorescence data are performed at the same timings and for the same time periods as those shown in FIG. 4, within a period equivalent to 12 pulses of the mechanical clock. The remaining time period caused by the reduction in the transport speed is used as a dummy period. If the dummy period is long, the light source 21 is lit during the dummy period at a timing and for a time period which do not adversely affect measurement of fluorescence and phosphorescence.

In the fluorescence mode shown in FIG. 5, as in the phosphorescence mode, the transport speed can be changed to 2300 mm/S or lower. In the fluorescence mode, lighting of the light source 21 and acquisition of fluorescence data are performed within a period equivalent to 1 pulse of the mechanical clock. For example, when the transport speed is changed to 1600 mm/S, lighting of the light source 21 and acquisition of fluorescence data are performed within a period of 158.75 mS equivalent to 1 pulse of the mechanical clock.

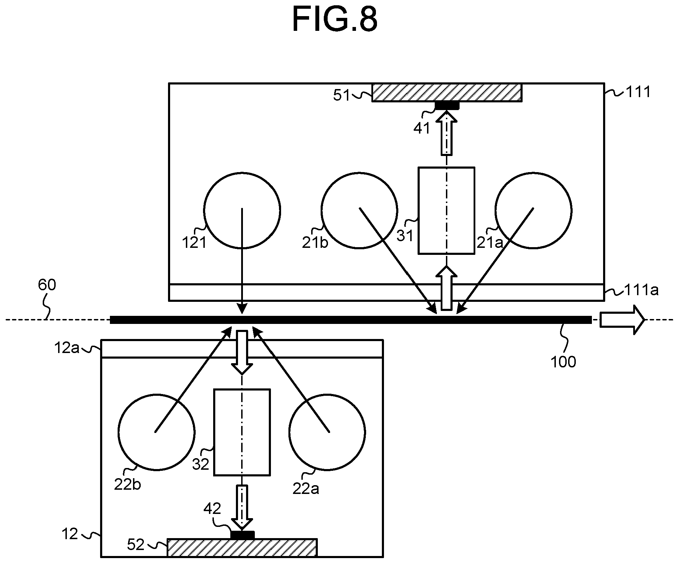

Next, an example of acquisition of a transmission image by the fluorescence/phosphorescence detector will be described. FIG. 8 is a schematic cross-sectional view showing an example of a configuration of a fluorescence/phosphorescence detector that acquires a transmission image. Hereinafter, differences from the fluorescence/phosphorescence detector shown in FIG. 2 will be described.

The fluorescence/phosphorescence detector shown in FIG. 8 is different from the fluorescence/phosphorescence detector shown in FIG. 2 in that a light source 121 for acquiring a transmission image is accommodated in the case. A block diagram showing the functional structure of the fluorescence/phosphorescence detector is omitted because the block diagram is identical to the block diagram shown in FIG. 3 except that the light source control unit 72 controls the light source 121 as well as the light sources 21, 22. Hereinafter, in order to distinguish the light sources 21, 22 from the light source 121, the former is referred to as "reflection light source" and the latter is referred to as "transmission light source". For example, the reflection light sources 21, 22 emit ultraviolet light, and the transmission light source 121 emits infrared light.

A case of an upper unit 111 has a shape longer than the case of the lower unit 12 in the transport direction of a banknote 100. In the case, the transmission light source 121 is disposed at a position opposing the condenser lens 32 and the light receiver 42 of the lower unit 12. Thus, light emitted from the transmission light source 121 transmits through the banknote 100 disposed outside the case, and enters the lower unit 12. In the lower unit 12, the transmissive light is condensed by the condenser lens 32 and received by the light receiver 42. A transmission image of the banknote 100 can be generated based on data from the light receiver 42 that receives the transmissive light having transmitted through the banknote 100.

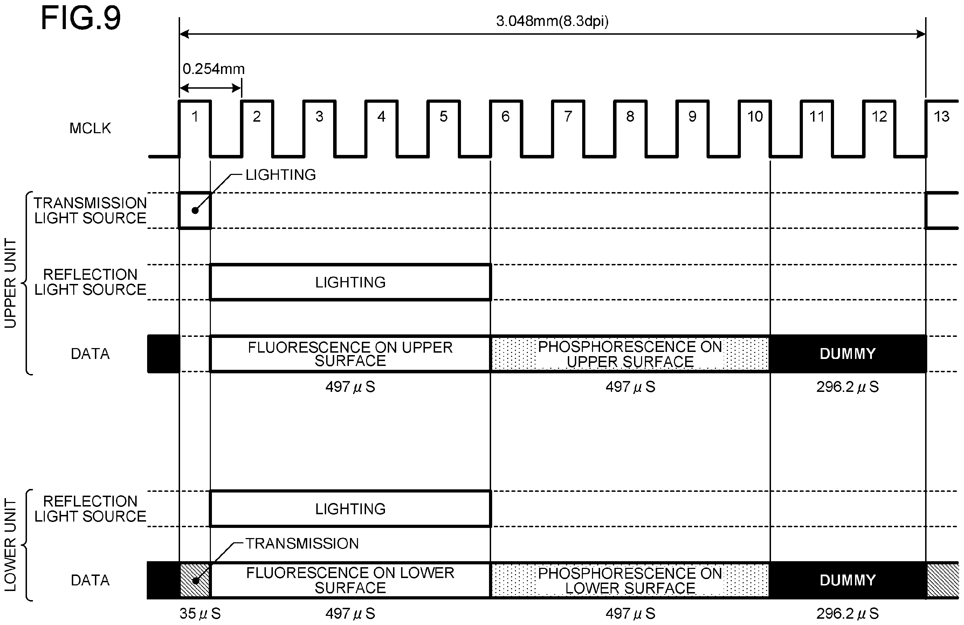

FIG. 9 is a timing chart showing timings to measure fluorescence, phosphorescence, and transmissive light in a fluorescence/phosphorescence mode. The fluorescence/phosphorescence mode shown in FIG. 9 is different from the fluorescence/phosphorescence mode shown in FIG. 4 in that firstly, the transmission light source 121 is turned on to acquire data of the transmissive light having transmitted through the banknote 100. When a period of 35 µS has elapsed after turn-on of the transmission light source 121, the light source control unit 72 turns off the transmission light source 121.

Simultaneously with turn-on of the transmission light source 121 by the light source control unit 72, the data acquisition unit 73 starts to acquire data from the light receiver 42, in the lower unit 12, which receives the transmissive light. Acquisition of the transmissive light data is continued for 35 µS until the transmission light source 121 is turned off. Simultaneously with turn-off of the transmission light source 121, the data acquisition unit 73 ends acquisition of the transmissive light data.

Simultaneously with turn-off of the transmission light source 121, the light source control unit 72 turns on the reflection light source 21 in the upper unit 111 and the reflection light source 22 in the lower unit 12. Thereafter, similar to FIG. 4, acquisition of fluorescence data and acquisition of phosphorescence data are performed, and the one cycle of measurement is completed through a dummy period in which no data is acquired.

Specifically, similar to FIG. 4, during a period of 497 µS, fluorescence data on the upper surface of the banknote is acquired from the light receiver 41 with the reflection light source 21 in the upper unit 111 being lit, and fluorescence data on the lower surface of the banknote is acquired from the light receiver 42 with the reflection light source 22 in the lower unit 12 being lit. During a subsequent period of 497 µS, phosphorescence data on the upper surface of the banknote is acquired from the light receiver 41 with the reflection light source 21 in the upper unit 111 being off, and phosphorescence data on the lower surface of the banknote is acquired from the light receiver 42 with the reflection light source 22 in the lower unit 12 being off. During a subsequent period of 296.2 µS, a dummy period takes place in which no data is acquired from the light receiver 41 in the upper unit 111 and the light receiver 42 in the lower unit 12.

The dummy period is 296.2 µS in FIG. 9 while it is 331.2 µS in FIG. 4. The dummy period shown in FIG. 4 is reduced by a period of 35 µS, and this period is used for acquisition of transmission data. Thus, similar to FIG. 4, the one cycle of measurement is completed while the banknote 100 is transported by 3.048 mm, thereby obtaining a fluorescence image, a phosphorescence image, and a transmission image, each having a resolution of about 8.3 dpi in the sub scanning direction.

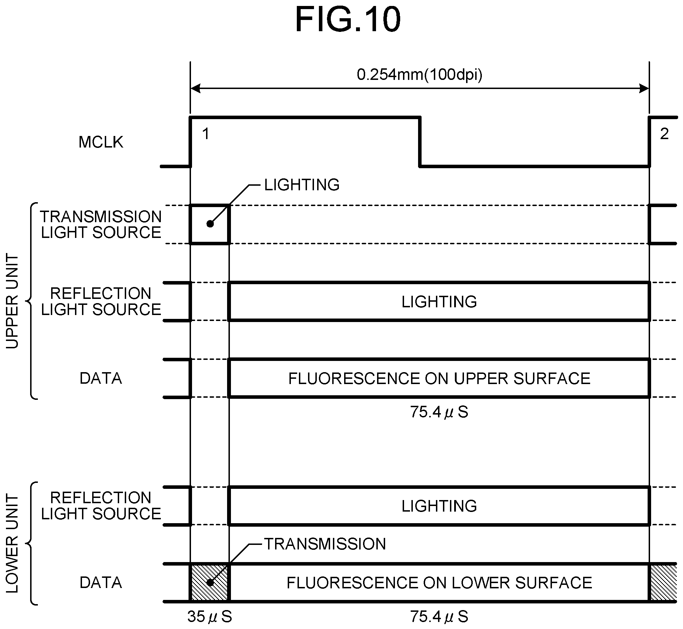

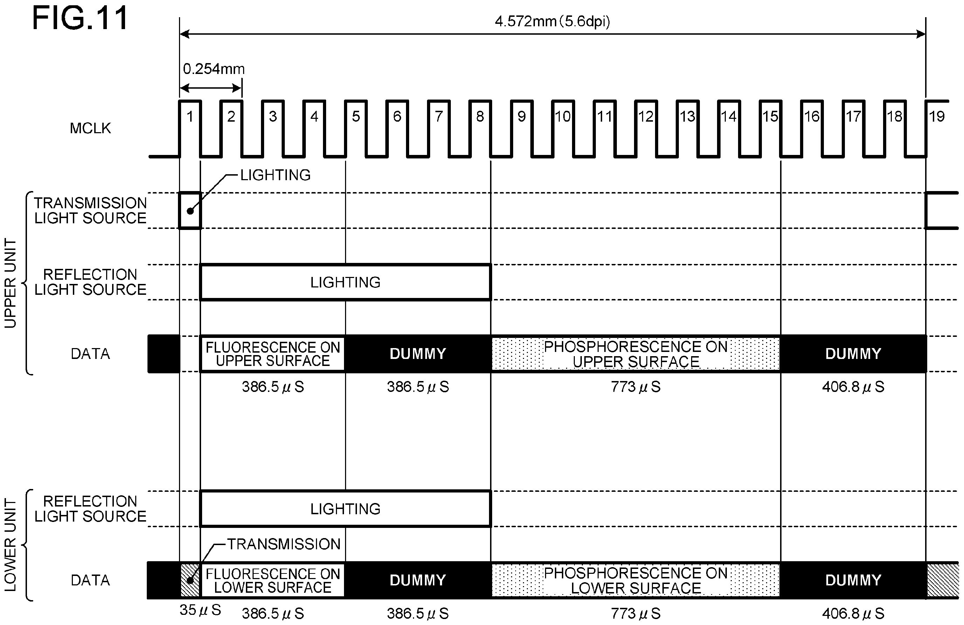

The timing at which the banknote 100 being transported along the transport path 60 arrives at the area of measurement by the lower unit 12 is different from the timing at which the banknote 100 arrives at the area of measurement by the upper unit 111. Measurement is started in the cycle shown in FIG. 9 in accordance with the timing at which the banknote 100 arrives at the area of measurement by the lower unit 12. Also, in FIG. 10 and FIG. 11, measurement is started in a cycle shown in each figure in accordance with the timing at which the banknote 100 arrives at the area of measurement by the lower unit 12. Thus, a fluorescence image and a phosphorescence image of the upper surface of the banknote, a fluorescence image and a phosphorescence image of the lower surface of the banknote, and a transmission image can be acquired while the banknote 100 passes through the position where the fluorescence/phosphorescence detector is disposed.

FIG. 10 is a timing chart showing timings to measure fluorescence and transmissive light in a fluorescence mode. The fluorescence mode shown in FIG. 10 is different from the fluorescence mode shown in FIG. 5 in that initially, the transmission light source 121 is turned on to acquire data of transmissive light having transmitted through the banknote 100. When a period of 35 µS has elapsed after turn-on of the transmission light source 121, the light source control unit 72 turns off the transmission light source 121.

Simultaneously with turn-on of the transmission light source 121 by the light source control unit 72, the data acquisition unit 73 starts to acquire data from the light receiver 42, in the lower unit 12, which receives the transmissive light. Acquisition of the transmissive light data is continued for 35 µS until the transmission light source 121 is turned off. Simultaneously with turn-off of the transmission light source 121, the data acquisition unit 73 ends acquisition of the transmissive light data.

Simultaneously with turn-off of the transmission light source 121, the light source control unit 72 turns on the reflection light source 21 in the upper unit 111 and the reflection light source 22 in the lower unit 12. Thereafter, during a period of 75.4 µS, fluorescence data on the upper surface of the banknote is acquired from the light receiver 41 with the reflection light source 21 in the upper unit 111 being lit, and fluorescence data on the lower surface of the banknote is acquired from the light receiver 42 with the reflection light source 22 in the lower unit 12 being lit. Thus, the one cycle of measurement is completed.

The fluorescence data acquisition period is 75.4 µS in FIG. 10, while it is 110.4 µS in FIG. 5. The fluorescence data acquisition period shown in FIG. 5 is reduced by a period of 35 µS, and this period is used for acquisition of transmission data. Thus, similar to FIG. 5, the one cycle of measurement is completed while the banknote 100 is transported by 0.254 mm, thereby acquiring a fluorescence image and a transmission image each having a resolution of 100 dpi in the sub scanning direction.

FIG. 11 is a timing chart showing timings to measure fluorescence, phosphorescence, and transmissive light in a phosphorescence mode. The phosphorescence mode shown in FIG. 11 is different from the phosphorescence mode shown in FIG. 6 in that initially, the transmission light source 121 is turned on to acquire data of transmissive light having transmitted through the banknote 100. When a period of 35 µS has elapsed after turn-on of the transmission light source 121, the light source control unit 72 turns off the transmission light source 121.

Simultaneously with turn-on of the transmission light source 121 by the light source control unit 72, the data acquisition unit 73 starts to acquire data from the light receiver 42, in the lower unit 12, which receives the transmissive light. Acquisition of the transmissive light data is continued for 35 µS until the transmission light source 121 is turned off. Simultaneously with turn-off of the transmission light source 121, the data acquisition unit 73 ends acquisition of the transmissive light data.

Simultaneously with turn-off of the transmission light source 121, the light source control unit 72 turns on the reflection light source 21 in the upper unit 111 and the reflection light source 22 in the lower unit 12. Thereafter, similar to FIG. 6, acquisition of fluorescence data and acquisition of phosphorescence data are performed, and the one cycle of measurement is completed through a dummy period in which no data is acquired.

Specifically, similar to FIG. 6, during a period of 386.5 µS, fluorescence data on the upper surface of the banknote is acquired from the light receiver 41 with the reflection light source 21 in the upper unit 111 being lit, and fluorescence data on the lower surface of the banknote is acquired from the light receiver 42 with the reflection light source 22 in the lower unit 12 being lit. During a subsequent period of 386.5 µS, a dummy period takes place in which no data is acquired from the light receiver 41 in the upper unit 111 and the light receiver 42 in the lower unit 12. During a subsequent period of 773 µS, phosphorescence data is acquired from the light receiver 41 with the reflection light source 21 in the upper unit 111 being off, and phosphorescence data is acquired from the light receiver 42 with the reflection light source 22 in the lower unit 12 being off. During a subsequent period of 406.8 µS, a dummy period takes place in which no data is acquired from the light receiver 41 in the upper unit 111 and the light receiver 42 in the lower unit 12.

The dummy period after acquisition of the phosphorescence data is 406.8 µS in FIG. 11, while it is 441.8 µS in FIG. 6. The dummy period after acquisition of the phosphorescence data shown in FIG. 6 is reduced by a period of 35 µS, and this period is used for acquisition of transmission data. Thus, similar to FIG. 6, the one cycle of measurement is completed while the banknote 100 is transported by 4.572 mm, thereby acquiring a fluorescence image, a phosphorescence image, and a transmission image, each having a resolution of about 5.6 dpi in the sub scanning direction.

In the fluorescence/phosphorescence detector shown in FIG. 8, the transport speed of the banknote 100 in each mode can be changed. When the transport speed is changed, a time difference in one cycle caused by the transport speed is adjusted by, for example, a dummy period as described above, thereby acquiring transmissive light data, fluorescence data, and phosphorescence data as shown in FIG. 9 to FIG. 11.

As described above, in the fluorescence/phosphorescence detector shown in FIG. 8, a transmission image of the banknote 100 can be acquired in addition to a fluorescence image and a phosphorescence image of the banknote 100. For example, even when the banknote 100 is transported in a skewed state, the transport state of the banknote 100 during luminescence measurement can be determined based on the transmission image. Then, the position and area where fluorescence is observed on the banknote 100 and the position and area where phosphorescence is observed on the banknote 100 can be specified based on the fluorescence image, the phosphorescence image, and the transmission image of the banknote 100.

In this embodiment, the light sources 21, 22 emit ultraviolet light, and the light source 121 emits infrared light. However, the wavelengths of light emitted from the light sources 21, 22, and 121 are not particularly limited. For example, for the light sources 21, 22, a wavelength that causes special ink used for printing of the banknote 100 to become excited and emit light is selected as appropriate. For the light source 121, a wavelength that is suitable for acquiring a transmission image of the banknote 100 is selected as appropriate.

The present invention is not limited to the configuration in which each of the light sources 21, 22, and 121 is composed of multiple illuminators such as LEDs arrayed in the direction perpendicular to the transport direction of the banknote 100. A light guide member may be used. Specifically, a bar-shaped light guide member, which is long in the direction perpendicular to the transport direction of the banknote 100, may be used as each of the light sources 21, 22, and 121. Then, light emitted from an illuminator such as an LED may be caused to enter the light guide member from an end surface thereof, and the light may be emitted from the light guide member toward the banknote 100. In this case, if a plurality of kinds of LEDs that emit light at different wavelengths are used, light of a wavelength selected according to the kind of the banknote 100 can be emitted from the light guide member toward the banknote 100.

In the present embodiment, the fluorescence/phosphorescence detector is used for measuring at least one of fluorescence and phosphorescence. However, the fluorescence/phosphorescence detector can be used for acquiring an image of a banknote 100 on which neither fluorescence nor phosphorescence is observed. For example, the light sources 21, 22, and 121 are allowed to emit visible light in addition to ultraviolet light and infrared light. When the banknote 100 includes luminescent ink, a fluorescence image and a phosphorescence image are acquired by irradiating the banknote 100 with ultraviolet light, and a transmission image is acquired by irradiating the banknote 100 with infrared light. Meanwhile, when the banknote 100 does not include luminescent ink, the banknote 100 is irradiated with visible light emitted from the light sources 21, 22, and 121 to acquire a reflection image and a transmission image of the banknote 100. Thus, the fluorescence/phosphorescence detector can be effectively used also for handling the banknote 100 on which no luminescence is observed. For example, after a banknote image having a predetermined resolution is obtained by the recognition unit, a banknote image having a resolution different from that obtained in the recognition unit is acquired by the fluorescence/phosphorescence detector to be used for recognition of the banknote 100.

In the present embodiment, the fluorescence/phosphorescence detector acquires luminescence data from both surfaces of the banknote 100. However, when only one surface of the banknote 100 emits light, luminescence data may be acquired only from the light-emitting surface. For example, when the banknote 100 is transported with the light-emitting surface facing upward, fluorescence data and phosphorescence data are acquired from the upper surface of the banknote 100 as described above. Specifically, the recognition unit disposed upstream in the transport direction specifies whether the banknote 100 is transported in the transport path 60 with the light-emitting surface being an upper surface or a lower surface. The fluorescence/phosphorescence detector can acquire luminescence data from the light-emitting surface specified by the recognition unit, that is, from the upper surface or the lower surface of the banknote 100

In the present embodiment, during the time period illustrated as "lighting" in each of FIGS. 4 to 7 and FIGS. 9 to 11, lighting of the corresponding light source 21, 22, or 121 is continued. However, the lighting period may be controlled within the range (time period) illustrated in each figure. Specifically, the range illustrated as "lighting" may indicate a possible lighting timing of the corresponding light source 21, 22, or 121, and the light source 21, 22, or 121 may be lit during only a part of the range. The fluorescence/phosphorescence detector can control the light emission period of the light source 21, 22, or 121 within the illustrated range, in accordance with the kind of light emitted from the light source 21, 22, or 121, the emission intensity of the light, the kind of luminescence observed on the banknote 100, etc. For example, turn-on and turn-off of the light source 21, 22, or 121 may be executed a plurality of number of times within the illustrated range.

As described above, according to the fluorescence/phosphorescence detector of the present embodiment, a measurement mode according to the kind of a banknote can be selected from among a plurality of measurement modes prepared in advance, and fluorescence and/or phosphorescence can be measured in the selected mode. In each measurement mode, an emission intensity and an emission period of light to be applied to the banknote from a light source, a timing and a measurement period to measure fluorescence, and a timing and a measurement period to measure phosphorescence, can be set. Thus, the banknote is irradiated with an appropriate amount of excitation light at an appropriate timing according to the characteristics of luminescence to be observed on the banknote, whereby the emission intensities of fluorescence and phosphorescence can be measured with high accuracy. A fluorescence image and a phosphorescence image generated based on the measurement result can be used for recognition of the banknote.

### INDUSTRIAL APPLICABILITY

As described above, a fluorescence/phosphorescence detector and a fluorescence/phosphorescence detection method according to the present invention are flexibly applicable to detection of various kinds of fluorescence and phosphorescence.

### DESCRIPTION OF THE REFERENCE CHARACTERS

- 11, 111: Upper unit
- 12: Lower unit
- 21, 22: Light source (reflection light source)
- 31, 32: Condenser lens
- 41, 42: Light receiver
- 51, 52: Substrate
- 60: Transport path
- 70: Controller
- 71: Measurement mode selection unit
- 72: Light source control unit
- 73: Data acquisition unit
- 80: Memory
- 121: Light source (transmission light source)

## Claims

1. A fluorescence/phosphorescence detector comprising:
a light source configured to emit light toward a sheet being transported along a transport path;
a light receiver configured to receive light emitted from the sheet;
a memory configured to store therein, a plurality of kinds of measurement modes which are different from each other in at least one of a time period of light emission from the light source, an emission intensity of the light from the light source, a timing to measure fluorescence by the light receiver, a time period of measurement of the fluorescence, a timing to measure phosphorescence by the light receiver, and a time period of measurement of the phosphorescence;
a measurement mode selection unit configured to select any of the measurement modes;
a light source control unit configured to control the light source, based on the measurement mode selected by the measurement mode selection unit; and
a data acquisition unit configured to acquire, from the light receiver, at least one of fluorescence data obtained by measuring the fluorescence and phosphorescence data obtained by measuring the phosphorescence, based on the measurement mode selected by the measurement mode selection unit.

2. The fluorescence/phosphorescence detector according to claim 1, wherein
the measurement modes include:
a fluorescence/phosphorescence mode for acquiring the fluorescence data while the light source is lit, and acquiring the phosphorescence data after the light source is turned off;
a fluorescence mode for acquiring the fluorescence data while the light source is lit, with a higher resolution than in the fluorescence/phosphorescence mode; and
a phosphorescence mode for acquiring the phosphorescence data after the light source emits light with a greater amount of light than in the fluorescence/phosphorescence mode and is turned off.

3. The fluorescence/phosphorescence detector according to claim 2, wherein the light source is lit during a longer time period in the phosphorescence mode than in the fluorescence/phosphorescence mode.

4. The fluorescence/phosphorescence detector according to claim 2 or 3, wherein the fluorescence/phosphorescence mode and the phosphorescence mode each include a dummy period in which neither the fluorescence data nor the phosphorescence data is acquired.

5. The fluorescence/phosphorescence detector according to claim 4, wherein the light source is lit during the dummy period in the phosphorescence mode.

6. The fluorescence/phosphorescence detector according to any one of claims 1 to 5, wherein the measurement mode selection unit receives an input indicating the kind of the sheet, and selects a measurement mode corresponding to the kind of the sheet.

7. The fluorescence/phosphorescence detector according to claim 6, further comprising
a recognition unit disposed along the transport path, and configured to recognize the kind of the sheet being transported along the transport path,
wherein the measurement mode selection unit receives an input indicating the kind of the sheet from the recognition unit, and selects a measurement mode corresponding to the kind of the sheet.

8. A fluorescence/phosphorescence detection method of detecting, by a fluorescence/phosphorescence detector, fluorescence and phosphorescence emitted from a sheet being transported along a transport path, the method comprising:
selecting a measurement mode from among a plurality of kinds of measurement modes which are different from each other in at least one of a time period of light emission from the light source, an emission intensity of the light from the light source, a timing to measure fluorescence by the light receiver, a time period of measurement of the fluorescence, a timing to measure phosphorescence by the light receiver, and a time period of measurement of the phosphorescence;
emitting light from the light source, based on the selected measurement mode; and
acquiring, from the light receiver, at least one of fluorescence data obtained by measuring the fluorescence and phosphorescence data obtained by measuring the phosphorescence, based on the selected measurement mode.
